(19) Europäisches Patentamt
European Patent Office
Office européen des brevets

(11) EP 1 417 271 B1

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(21) Anmeldenummer: **02774510.8**

(22) Anmeldetag: **10.08.2002**

(51) Int Cl.:
***C09D 133/10*** *(2006.01)*

(86) Internationale Anmeldenummer:
**PCT/EP2002/008984**

(87) Internationale Veröffentlichungsnummer:
**WO 2003/016413 (27.02.2003 Gazette 2003/09)**

(54) **THERMISCH UND MIT AKTINISCHER STRAHLUNG HÄRTBARE BESCHICHTUNGSSTOFFE UND IHRE VERWENDUNG**

COATING MATERIALS THAT CAN BE CURED THERMALLY AND BY ACTINIC RADIATION, AND THE USE THEREOF

MATIERES DE REVETEMENT DURCISSABLES THERMIQUEMENT ET PAR RAYONNEMENT ACTINIQUE ET LEUR UTILISATION

(84) Benannte Vertragsstaaten:
**AT BE BG CH CY CZ DE DK EE ES FI FR GB GR IE IT LI LU MC NL PT SE SK TR**

(30) Priorität: **16.08.2001 DE 10140145**

(43) Veröffentlichungstag der Anmeldung:
**12.05.2004 Patentblatt 2004/20**

(73) Patentinhaber: **BASF Coatings Aktiengesellschaft**
**48165 Münster (DE)**

(72) Erfinder:
- **BAUMGART, Hubert**
**48163 Münster (DE)**
- **CONRING, Uwe**
**48249 Dülmen (DE)**

(56) Entgegenhaltungen:
**DE-A- 10 001 510** **US-B1- 6 265 487**

- **[Online] XP002219318 Gefunden im Internet: <URL: www.byk-chemie.com> [gefunden am 2002-11-04] das ganze Dokument**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue, thermisch und mit aktinischer Strahlung härtbare Beschichtungsstoffe. Außerdem betrifft die vorliegende Erfindung die Verwendung der neuen, thermisch und mit aktinischer Strahlung härtbaren Beschichtungsstoffe für die Herstellung ein- und mehrschichtiger Klarlackierungen und farb- und/oder effektgebender Lackierungen. Des weiteren betrifft die vorliegende Erfindung die Verwendung der neuen, thermisch und mit aktinischer Strahlung härtbaren Beschichtungsstoffe als Klebstoffe und Dichtungsmassen für die Herstellung von Klebschichten und Dichtungen.

Farb- und/oder effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht. Hierbei dient die . ETL insbesondere dem Korossionsschutz des Blechs. Sie wird von der Fachwelt häufig auch als Grundierung bezeichnet. Die Füllerlackierung dient der Abdeckung von Unebenheiten des Untergrundes und gewähren aufgrund ihrer Elastizität die Steinschlagbeständigkeit. Gegebenenfalls kann die Füllerlackierung noch zur Verstärkung des Deckvermögens und zur Vertiefung des Farbtons der Lackierung dienen. Die Basislackierung steuert die Farben und/oder die optischen Effekte bei. Die Klarlackierung dient der Verstärkung der optischen Effekte und dem Schutz der Lackierung vor mechanischer und chemischer Schädigung.

Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen. Im folgenden werden diese mehrschichtigen Lackierungen als farb-und/oder effektgebende Mehrschichtlackierungen bezeichnet.

Nutzfahrzeuge werden wegen ihrer Größe und weil sie fast immer nachträglich mit Logos, Beschriftungen und/oder Farbfeldern oder Bildern versehen werden, häufig nur mit einer pigmentierten Beschichtung, einer sogenannten Unidecklackierung, versehen.

Neuerdings werden insbesondere die Klarlackierungen aus Klarlacken hergestellt, die thermisch und mit aktinischer Strahlung härtbar sind. Unter aktinischer Strahlung ist hier und im folgenden elektromagnetische Strahlung, wie nahes Infrarot, sichtbares Licht, UV-Strahlung oder Röntgenstrahlung, insbesondere UV-Strahlung, und Korpuskularstrahlung, wie Elektronenstrahlung, zu verstehen. Die kombinierte Härtung durch Hitze und aktinische Strahlung wird von der Fachwelt auch als Dual-Cure bezeichnet.

Dual-Cure-Beschichtungsstoffe, insbesondere Dual-Cure-Klarlacke, weisen den wesentlichen Vorteil auf, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen liefern, deren anwendungstechnisches Eigenschaftsprofil an das der Beschichtungen außerhalb der Schattenzonen zumindest heranreicht. Dadurch werden die in den Schattenzonen befindlichen Beschichtungen auch nicht mehr leicht durch mechanische und/oder chemische Einwirkung geschädigt, was beispielsweise in der Linie beim Einbau weiterer Bestandteile von Kraftfahrzeugen in die beschichteten Karosserien eintreten kann.

Andererseits kann die Härtung mit aktinischer Strahlung eine unvollständige thermische Härtung kompensieren, wenn beispielsweise die Dual-Cure-Beschichtungsstoffe wegen der Temperaturempfindlichkeit der beschichtete Substrate nicht auf die für den raschen Ablauf der thermischen Vernetzungsreaktionen notwendigen Temperaturen erhitzt werden dürfen.

Dual-Cure-Beschichtungsstoffe und ihre Verwendung zur Herstellung hochwertiger farb- und/oder effektgebender Mehrschichtlackierungen sind beispielsweise aus den deutschen Patentanmeldungen DE 42 15 070 A1, DE 198 18 735 A1, DE 199 08 018 A1, DE 199 30 665 A1, DE 199 30 067 A1, DE 199 30 664 A1, DE 199 24 674 A1, DE 199 20 799 A1, 199 58 726 A1 oder DE 199 61 926 A1 bekannt oder werden in den nicht vorveröffentlichten deutschen Patentanmeldungen DE 100 27 268.1, DE 100 42 152.0, DE 100 47 989.8 oder DE 100 55 549.7 beschrieben. Die Verwendung von Additiven auf Basis eines (Meth)Acrylat(co)polymerisats eines zahlenmittleren Molekulargewichts von 5.000 bis 100.000 Dalton geht aus den Patentanmeldungen nicht hervor.

Die Reparaturlackierung oder Doppellackierung dieser hochwertigen farb-und/oder effektgebenden Mehrschichtlackierungen stellt höchste Anforderungen an die Reparaturlacke und die Reparaturlackierverfahren. Dies ist insbesondere der Fall bei der Reparaturlackierung von lackierten Karosserien in der Linie, bei der die Original- oder Erstlackierung (OEM) großflächig oder insgesamt überlackiert werden muß (Doppellackierung). Dabei dürfen die Farbtöne und/oder die optischen Effekte in der Reparaturlackierung nicht von denen der Erstlackierung abweichen.

Außerdem muß die Reparaturlackierung fest auf der Originallackierung haften.

Werden jedoch die Originallackierungen unter Verwendung der technologisch besonders vorteilhaften Dual-Cure-Klarlacke hergestellt, ergeben sich Haftungsprobleme, die auf die besonders hohe Vernetzungsdichte der strahlengehärteten Systeme zurückzuführen sind. Eine gute Haftung kann in diesen Fällen nur durch eine physikalische

Behandlung, beispielsweise eine Behandlung mit Ultraschall und/oder Wärme, eine mechanische Behandlung, beispielsweise durch Schleifen, Polieren und/oder Schwabbeln, und/oder eine chemische Behandlung, beispielsweise durch Anätzung mit geeigneten Chemikalien, wie Säuren oder Basen, und/oder durch Beflammen, erzielt werden. Diese Maßnahmen mögen bei der kleinflächigen Reparaturlackierung noch zu vertreten sein, im großtechnischen Maßstab verbieten sie sich praktisch von selbst, weil sie in diesem Rahmen zu zeit- und energieaufwendig und häufig sicherheitstechnisch bedenklich sind. Werden die Maßnahmen aber nicht getroffen, neigen die Doppellackierungen und Reparaturlackierungen insbesondere bei den Aufbauten

- Klarlackierung (Original) / Klarlackierung (Reparatur) und

- Basislackierung (Original) / Klarlackierung (Original) /Basislackierung (Reparatur) / Klarlackierung (Reparatur)

zur Delamination, was bei so hochwertigen Produkten wie Kraftfahrzeugen nicht akzeptabel ist. Diese wesentlichen Nachteile stehen der weiten Verbreitung der ansonsten so vorteilhaften Dual-Cure-Beschichtungsstoffe in der großtechnischen Lackierung entgegen.

Diese Probleme treten auch bei der Reparaturlackierung oder der Doppellackierung von Unidecklackierungen, die aus pigmentierten, thermisch und mit aktinischer Strahlung härtbaren Beschichtungsstoffen hergestellt wurden, auf.

Aufgabe der vorliegenden Erfindung ist es, neue, thermisch und mit aktinischer Strahlung härtbare (Dual-Cure-) Beschichtungsstoffe zu finden, die neue Beschichtungen mit verbesserten anwendungstechnischen Eigenschaften liefern. Insbesondere sollen die neuen Beschichtungen als einschichtige Beschichtung oder als oberste Beschichtung einer Mehrschichtlackierung eine großflächige Reparaturlackierung oder Doppellackierung gestatten, ohne daß haftungsfördernde Maßnahmen, wie die vorstehend erwähnten physikalischen, mechanischen und/oder chemischen Behandlungen der Oberfläche getroffen werden müssen.

Demgemäß wurden die neuen thermisch und mit aktinischer Strahlung härtbaren Beschichtungsstoffe gefunden, enthaltend

(A) mindestens ein Bindemittel, ausgewählt aus der Gruppe, bestehend aus physikalisch, thermisch, mit aktinischer Strahlung und thermisch und mit aktinischer Strahlung härtbaren, statistisch, alternierend und blockartig aufgebauten, linearen, verzweigten und kammartig aufgebauten, Polyadditionsharzen und Polykondensationsharzen sowie (Co)Polymerisaten von olefinisch ungesättigten Monomeren;
und

(B) 0,01 bis 3 Gew.-%, bezogen auf den Festkörper des Beschichtungsstoffs, mindestens eines Additivs auf der Basis mindestens eines (Meth)Acrylat(co)polymerisats, ausgewählt aus der Gruppe, bestehend aus (Meth)Acrylat (co)polymerisaten eines zahlenmittleren Molekulargewichts von 4.000 bis 100.000 Dalton und einer niedrigen bis hohen Polarität.

Im folgenden werden die neuen, thermisch und mit aktinischer Strahlung härtbaren Beschichtungsstoffe als "erfindungsgemäße Beschichtungsstoffe bezeichnet.

Weitere Erfindungsgegenstände gehen aus der Beschreibung hervor.

Im Hinblick auf den Stand der Technik war es überraschend und für den Fachmann nicht vorhersehbar, daß die der vorliegenden Erfindung zugrundeliegende Aufgabe durch die erfindungsgemäße Verwendung des Additivs (B) gelöst werden konnte. Insbesondere überraschte, daß das Additiv (B), was die Verbesserung der Benetzbarkeit der Originallackierungen und die Haftung zwischen Originallackierung und Reparaturlackierung oder Dopppellackierung betraf, auch in geringen Mengen außerordentlich wirksam war, so daß haftungsfördernde Behandlungen der Oberfläche der Originallackierungen, wie eine physikalische Behandlung, beispielsweise eine Behandlung mit Ultraschall und/oder Wärme, eine mechanische Behandlung, beispielsweise durch Schleifen, Polieren und/oder Schwabbeln, und/oder eine chemische Behandlung, beispielsweise durch Anätzung mit geeigneten Chemikalien, wie Säuren oder Basen, und/oder durch Beflammen, nicht mehr durchgeführt werden mußten. Darüber hinaus war es überraschend, daß die erfindungsgemäßen Beschichtungen eine signifikant verringerte Empfindlichkeit gegenüber Fingerabdrücken aufwiesen, was die Handhabung von Substraten, die mit den erfindungsgemäßen Beschichtungen beschichtet waren, außerordentlich erleichterte. Vollends überraschend war, daß die erfindungsgemäßen Beschichtungsstoffe auch als Dual-Cure-Klebstoffe und -Dichtungssmassen zur Herstellung von Klebschichten und Dichtungen verwendet werden konnten.

Der wesentliche Bestandteil des erfindungsgemäßen Beschichtungsstoffs ist mindestens ein, insbesondere ein, Additiv (B) auf der Basis mindestens eines, insbesondere eines, (Meth)Acrylat(co)polymerisats, insbesondere eines (Meth)Acrylatcopolymerisats, ausgewählt aus der Gruppe, bestehend aus (Meth)Acrylat(co)polymerisats eines zahlenmittleren Molekulargewichts von 4.000 bis 100.000, vorzugsweise 4.100 bis 90.000, bevorzugt 4.200 bis 80.000, besonders bevorzugt 4.3000 bis 60.000, ganz besonders bevorzugt 4.400 bis 50.000 und insbesondere 4.500 bis 40.000

Dalton und einer niedrigen bis hohen, insbesondere einer niedrigen bis mittleren, Polarität.

Erfindungsgemäß ist das Additiv (B) in den erfindungsgemäßen Beschichtungsstoffen in einer Menge von, jeweils bezogen auf den Festkörper von (B), 0,01 bis 3, vorzugsweise 0,02 bis 2,8, bevorzugt 0,03 bis 2,6, besonders bevorzugt 0,04 bis 2,4 und insbesondere 0,05 bis 2,2 Gew.-% enthalten.

Das erfindungsgemäß zu verwendende (Meth)Acrylat(co)polymerisat (B) kann als solches zu den erfindungsgemäßen Beschichtungsstoffen hinzugegeben werden. Es ist indes von Vorteil, das (Meth)Acrylat(co)polymerisat (B) in der Form einer organischen Lösung zuzusetzen. Demgemäß enthält das erfindungsgemäß zu verwendende Additiv (B) vorzugsweise mindestens ein organisches Lösemittel. Der Gehalt an organischem Lösemittel kann breit variieren. Vorzugsweise wird der Lösemittelgehalt so eingestellt, daß der Festkörpergehalt des Additivs (B), bezogen auf (B), bei 10 bis 80, bevorzugt, 15 bis 75, besonders bevorzugt 20 bis 70, ganz besonders bevorzugt 25 bis 65 und insbesondere 30 bis 60 Gew.-% liegt.

Bevorzugt werden organische Lösemittel eingesetzt, die die Dual-Cure-Vernetzung der erfindungsgemäßen Beschichtungsstoffe nicht inhibieren und/oder keine störenden Wechselwirkungen mit Bestandteilen der erfindungsgemäßen Beschichtungsstoffe eingehen. Sie können dabei inert sein oder aber als thermisch und/oder mit aktinischer Strahlung vernetzbare Reaktiwerdünner an den Vernetzungsreaktionen teilnehmen. Der Fachmann kann daher geeignete Lösemittel leicht anhand ihres bekannten Lösevermögens und ihrer Reaktivität auswählen. Beispiele geeigneter Lösemittel sind aus D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, bekannt.

Die Additive (B) sind handelsübliche Produkte und werden beispielsweise unter der Marke BYK® 354, 355, 357, 358, 380, 381 oder 390, insbesondere 358, von der Firma Byk Chemie vertrieben.

Der weitere wesentliche Bestandteil der erfindungsgemäßen Beschichtungsstoffe ist mindestens ein Bindemittel (A)

Bindemittel (A) werden aus der Gruppe, bestehend aus physikalisch, thermisch oder thermisch und mit aktinischer Strahlung härtbaren, statistisch, alternierend und blockartig aufgebauten, linearen, verzweigte und kammartig aufgebauten (Co)Polymerisaten von ethylenisch ungesättigten Monomeren, Polyadditionsharzen und/oder Polykondensationsharzen, ausgewählt. Zu diesen Begriffen wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate (A) sind (Meth)Acryfat(co)polymerisate oder partiell verseifte Polyvinylester, insbesondere (Meth)Acrylatcopolymerisate.

Beispiele geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester.

Von diesen Bindemitteln (A) weisen die (Meth)Acrylatcopolymerisate und die Polyester, insbesondere die (Meth)Acrylatcopolymerisate, besondere Vorteile auf und werden deshalb besonders bevorzugt verwendet.

Der erfindungsgemäß zu verwendende Beschichtungsstoff enthält demnach bevorzugt mindestens ein, insbesondere ein, (Meth)Acrylatcopolymerisat (A) als Bindemittel. In manchen Fällen kann es aber vorteilhaft sein, mindestens zwei, insbesondere zwei, (Meth)Acrylatcopolymerisate (A) zu verwenden, die im Rahmen der nachstehend angegebenen bevorzugten Bereiche für OH-Zahl, Glasübergangstemperatur und zahlen- und massenmittleres Molekulargewicht ein unterschiedliches Eigenschaftsprofil aufweisen.

Das (Meth)Acrylatcopolymerisat (A) weist vorzugsweise

- eine OH-Zahl von 100 bis 220, bevorzugt 130 bis 200,besonders bevorzugt 140 bis 190 und insbesondere 145 bis 180 mg KOH/g,
- eine Glasübergangstemperatur von -35 bis +60, insbesondere -20 bis +40˚C,
- ein zahlenmittleres Molekulargewicht von 1.000 bis 10.000 Dalton, insbesondere 1.500 bis 5.000 Dalton, und
- ein massenmittleres Molekulargewicht von 2.000 bis 40.000 Dalton, insbesondere 3.000 bis 20.000 Dalton, auf.

Vorzugsweise enthält das (Meth)Acrylatcopolymerisat (A) eine seiner OH-Zahl entsprechende Menge an hydroxylgruppenhaltigen olefinisch ungesättigten Monomeren (a) einpolymerisiert, wovon

(a1) 20 bis 90, vorzugsweise 22 bis 85, bevorzugt 25 bis 80 und insbesondere 28 bis 75 Gew.-%, jeweils bezogen auf die hydroxylgruppenhaltigen Monomeren (a), aus der Gruppe, bestehend aus 4-Hydroxybutyl(meth)acrylat und 2-Alkyl-propan-1,3-diol-mono(meth)acrylaten, und

(a2) 20 bis 80, vorzugsweise 15 bis 78, bevorzugt 20 bis 75 und insbesondere 25 bis 72 Gew.-%, jeweils bezogen auf die hydroxylgruppenhaltigen Monomeren (a), aus der Gruppe, bestehend aus sonstigen hydroxylgruppenhaltigen olefinisch ungesättigten Monomere,

ausgewählt werden.

Beispiele geeigneter 2-Alkyl-propan-1,3-diol-mono(meth)acrylate (a1) sind 2-Methyl-, 2-Ethyl-, 2-Propyl-, 2-Isopropyl- oder 2-n-Butyl-propan-1,3-diol-mono(meth)acrylat, wovon 2-Methyl-propan-1,3-diol-mono(meth)acrylat besonders vorteilhaft ist und bevorzugt verwendet wird.

Beispiele geeigneter sonstiger hydroxylgruppenhaltiger olefinisch ungesättigter Monomere (a2) sind Hydroxyalkylester von olefinisch ungesättigen Carbon-, Sulfon- und Phosphonsäuren und sauren Phosphor- und Schwefelsäureestern, insbesondere Carbonsäuren, wie Acrylsäure, beta-Carboxyethylacrylat, Methacrylsäure, Ethacrylsäure und Crotonsäure, insbesondere Acrylsäure und Methacrylsäure. Sie leiten sich von einem Alkylenglykol ab, der mit der Säure verestert ist, oder sie sind durch die Umsetzung der Säure mit einem Alkylenoxid wie Ethylenoxid oder Propylenoxid erhältlich. Bevorzugt werden die Hydroxyalkylester, in denen die Hydroxyalkylgruppe bis zu 20 Kohlenstoffatome enthält, verwendet, insbesondere, 2-Hydroxyethyl- oder 3-Hydroxypropylacrylat oder -methacrylatt; 1,4-Bis(hydroxymethyl)cyclohexan- oder Octahydro-4,7-methano-1H-inden-dimethanolmonoacrylat oder -monomethacrylat; oder Umsetzungsprodukte aus cyclischen Estern, wie z.B. epsilon-Caprolacton und diesen Hydroxyalkylestern; oder olefinisch ungesättigte Alkohole wie Allylalkohol; oder Polyole, wie Trimethylolpropanmono- oder diallylether oder Pentaerythritmono-, -di- oder -triallylether; verwendet. Diese höherfunktionellen Monomeren (a2) werden im allgemeinen nur in untergeordneten Mengen eingesetzt. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der (Meth)Acrylatcopolymerisate (A) führen, es sei denn, sie sollen in der Form von vernetzten Mikrogelteilchen vorliegen.

Des weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomere (a2) in Betracht. Sofern verwendet, werden sie vorzugsweise nicht als alleinige Monomere (a2), sondern in einer Menge von 0,1 bis 10 Gew.%, bezogen auf das (Meth)Acrylatcopolymerisat (A), eingesetzt.

Des weiteren kommen Umsetzungsprodukte aus den vorstehend aufgeführten olefinisch undgesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic®-Säure, oder anstelle der Umsetzungsprodukte eine äquivalenten Menge an den vorstehend aufgeführten olefinisch undgesättigten Säuren, insbesondere Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure (vgl. Römpp Lexikon Lacke und Druckfarben, Georg Thieme Verlag, Stuttgart, New York, 1998, »Versatic®-Säuren«, Seiten 605 und 606), umgesetzt wird.

Nicht zuletzt sind Acryloxysilan-enthaltende Vinylmonomere als Monomere (a2) geeignet, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere (a1) und (a2) herstellbar sind.

Außer den Hydroxylgruppen können die thermisch und/oder mit aktinischer Strahlung härtbaren (Meth)acrylatcopolymerisate (A) im statistischen Mittel

(i) mindestens eine, insbesondere mindestens zwei, reaktive funktionelle Gruppe(n), die mit komplementären reaktiven funktionellen Gruppen thermisch initiierte Vernetzungsreaktionen eingehen können, und/oder

(ii) mindestens eine, insbesondere mindestens zwei, reaktive funktionelle Gruppe(n) mit mindestens einer, insbesondere einer, mit aktinischer Strahlung aktivierbaren Bindung

im Molekül enthalten.

Beispiele geeigneter erfindungsgemäß zu verwendender komplementärer reaktiver funktioneller Gruppen (i) sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R stehen für gleiche oder verschiedene aliphatische Reste oder sind miteinander zu einem aliphatischen oder heteroaliphatischen Ring verknüpft. ’

**Übersicht: Beispiele komplementärer funktioneller Gruppen (i)**

| Bindemittel und Vernetzungsmittel<br>oder<br>Vernetzungsmittel und Bindemittel | |
|---|---|
| -SH | -C(O)-OH |
| $-NH_2$ | -C(O)-O-C(O)- |
| $-O-(CO)-NH-(CO)-NH_2$ | -NCO |
| $-O-(CO)-NH_2$ | -NH-C(O)-OR |
| >NH | $-CH_2-OH$ |
| | $-CH_2-O-R$ |
| | $-NH-CH_2-O-R$ |
| | $-NH-CH_2-OH$ |
| | $-N(-CH_2-O-R)_2$ |
| | $-NH-C(O)-CH(-C(O)OR)_2$ |
| | -NH-C(O)-CH(-C(O)OR)(-C(O)-R) |
| | -NH-C(O)-NR'R'' |
| | $> Si(OR)_2$ |
| | 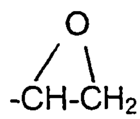 |
| | 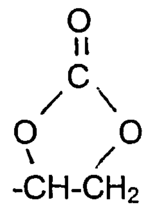 |
| -C(O)-OH | 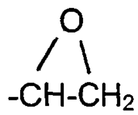 |
| | $-C(O)-N(CH_2-CH_2-OH)_2$ |

Die Auswahl der jeweiligen komplementären reaktiven funktionellen Gruppen (i) richtet sich zum einen danach, daß sie bei der Herstellung der Bindemittel (A) sowie bei der Herstellung, der Lagerung, der Applikation und dem Härtungsprozeß keine unerwünschten Reaktionen, insbesondere keine vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Vorzugsweise werden die komplementären reaktiven funktionellen Gruppen (i) zum einen aus der Gruppe, bestehend aus Thiol-, Amino-, N-Methylolamino-, N-Alkoxymethylamino-, Imino-, Carbamat-, Allophanat-und/oder Carboxylgruppen, und zum anderen aus der Gruppe bestehend aus Anhydrid-, Carboxyl-, Epoxy-, blockierten und unblokkierten Isocyanat-, Urethan-, Alkoxycarbonylamino- Methylol-, Methylolether-, Carbonat-, Amino- und/oder beta-Hydroxyalkylamidgruppen, ausgewählt.

Selbstvernetzende Bindemittel (A) enthalten insbesondere Methylol-, Methylolether- und/oder N-Alkoxymethylaminogruppen (i).

Die komplementären reaktiven funktionellen Gruppen (i) können mit Hilfe der nachstehend beschriebenen olefinisch ungesättigten Monomeren (a3), die die betreffenden reaktiven funktionellen Gruppen (i) enthalten, oder durch polymeranaloge Reaktionen in die (Meth)Acrylatcoplymerisate eingeführt werden.

Beispiele geeigneter olefinisch ungesättigter Monomere (a3) sind

(a31) Monomere, welche mindestens eine Aminogruppe pro Molekül tragen, wie

- Aminoethylacrylat, Aminoethylmethacrylat, Allylamin oder N-Methyliminoethylacrylat; und/oder

(a32) Monomere, welche mindestens eine Säuregruppe pro Molekül tragen, wie

- Acrylsäure, beta-Carboxyethylacrylat, Methacrylsäure, Ethacrylsäure, Crotonsäure, Maleinsäure, Fumarsäure oder Itaconsäure;
- olefinisch ungesättigte Sulfon- oder Phosphonsäuren oder deren Teilester;
- Maleinsäuremono(meth)acryloyloxyethylester, Bernsteinsäuremono(meth)acryloyloxyethylester oder Phthalsäuremono(meth)acryloyloxyethylester; oder
- Vinylbenzoesäure (alle Isomere), alpha-Methylvinylbenzoesäure (alle Isomere) oder Vinylbenzsolsulfonsäure (alle Isomere).

(a33) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Ein Beispiel zur Einführung reaktiver funktioneller Gruppen (i) über polymeranaloge Reaktionen ist die Umsetzung eines Teils der im Bindemittel (A) vorhandenen Hydroxylgruppen mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Bindemitteln (A). Weitere Beispiele geeigneter Methoden dieser Art sind aus den Patentschriften US 4,758,632 A1, US 4,301,257 A1 oder US 2,979,514 A1 bekannt. Außerdem ist es möglich, Carboxylgruppen durch die polymeranaloge Reaktion eines Teils der Hydroxylgruppen mit Carbonsäureanhydriden, wie Maleinsäureanhydrid oder Phthalsäureanhydrid, einzuführen.

Darüber hinaus können die (Meth)Acrylatcopolymerisate (A) noch mindestens ein olefinisch ungesättigtes Monomer (a4) enthalten, die im wesentlichen oder völlig frei von reaktiven funktionellen Gruppen sind, wie:

Monomere (a41):

Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1 H-inden-methanol- oder tert.-Butylcyclohexyl (meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (31) dieser Art sind aus der Offenlegungsschrift DE 196 25 773 A1, Spalte 3, Zeile 65, bis Spalte 4, Zeile 20, bekannt). Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3-oder -1,4-diol-di(meth)acrylat; Trimethylolpropan-di- oder -tri(meth) acrylat; oder Pentaerythrit-di-, -tri- oder -tetra(meth)acrylat enthalten. Rahmen der vorliegenden Erfindung sind hierbei unter untergeordneten Mengen an höherfunktionellen Monomeren (a41) solche Mengen zu verstehen, welche nicht zur Vernetzung oder Gelierung der Copolymerisate führen, es sei denn, sie sollen in der Form von vernetzten Mikrogelteilchen vorliegen.

Monomere (a42):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid

und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

Monomere (a43):

Diarylethylene, insbesondere solche der allgemeinen FormelI:

$$R^1R^2C{=}CR^3R^4 \qquad (I),$$

worin die Reste $R^1$, $R^2$, $R^3$ und $R^4$ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen $R^1$, $R^2$, $R^3$ und $R^4$ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder - Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3-oder 4-Phenylcyclohex-1-yl. Beispiele geeigneter Arylalkylreste sind 2-, 3-oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten $R^1$, $R^2$, $R^3$ und/oder $R^4$ um Phenyl- oder Naphthylreste, insbesondere Phenylreste. Die in den Resten $R^1$, $R^2$, $R^3$ und/oder $R^4$ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinyliden-bis(4-nitrobenzol), insbesondere Diphenylethylen (DPE), weswegen sie bevorzugt verwendet werden. Im Rahmen der vorliegenden Erfindung werden die Monomeren (b33) eingesetzt, um die Copolymerisation in vorteilhafter Weise derart zu regeln, daß auch eine radikalische Copolymerisation in Batch-Fahrweise möglich ist.

Monomere (a44):

Vinylaromatische Kohlenwasserstoffe wie Styrol, Vinyltoluol, Diphenylethylen oder alpha-Alkylstyrole, insbesondere alpha-Methylstyrol.

Monomere (a45):

Nitrile wie Acrylnitril und/oder Methacrylnitril.

Monomere (a46):

Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

Monomere (a47):

Allylverbindungen, insbesondere Allylether und -ester wie Allylmethyl-, - ethyl-, -propyl- oder -butylether oder Allylacetat, -propionat oder -butyrat.

Monomere (a48):

Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind.

Die Monomeren (a1) und (a2) sowie (a3) und/oder (a4) werden so ausgewählt, daß die vorstehend angegebenen OH-Zahlen und Glasübergangstemperaturen resultieren. Außerdem werden die Monomeren (a3), die reaktive funktionelle Gruppen (i) enthalten, nach Art und Menge so ausgewählt, daß sie die Vernetzungsreaktionen der Hydroxylgruppen mit den nachstehend beschriebenen Verbindungen (C) nicht inhibieren oder völlig verhindern.

Die Auswahl der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden können, vorgenommen werden:

$$1/Tg = \sum_{n=1}^{n=x} Wn/Tg_n; \qquad \Sigma_n W_n = 1$$

| | | |
|---|---|---|
| Tg | = | Glasübergangstemperatur des Poly(meth)acrylats; |
| $W_n$ | = | Gewichtsanteil des n-ten Monomers; |
| $Tg_n$ | = | Glasübergangstemperatur des Homopolymers aus dem n-ten Monomer und |
| x | = | Anzahl der verschiedenen Monomeren. |

Die Herstellung der bevorzugt zu verwendenden (Meth)Acrylatcopolymerisate (A) weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200°C.

Beispiele geeigneter Copolymerisationsverfahren werden in den Patentanmeldungen DE 197 09 465 A1, DE 197 09 476 A1, DE 28 48 906 A1, DE 195 24 182 A1, DE 198 28 742 A1, DE 196 28 143 A1, DE 196 28 142 A1, EP 0 554 783 A1, WO 95/27742, WO 82/02387 oder WO 98/02466 beschrieben. Die Copolymerisation kann indes auch in Polyolen (thermisch härtbare Reaktiwerdünner) als Reaktionsmedium durch geführt werden, wie dies beispielsweise in der deutschen Patentanmeldung DE 198 50 243 A1 beschrieben wird.

Beispiele geeigneter radikalischer Initiatoren sind Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trirnethylhexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators,

besonders bevorzugt 0,2 bis 20 Gew.-%, ganz besonders bevorzugt 0,5 bis 15 Gew.-% und insbesondere 1,0 bis 10 Gew.-% beträgt.

Des weiteren können Thiocarbonylthio-Verbindungen oder Mercaptane wie Dodecylmercaptan als Kettenübertragungsmittel oder Molekulargewichtsregler verwendet werden.

Vorzugsweise werden die (Meth)Acrylacopolymerisate (A) nach Art und Menge so ausgewählt, daß die erfindungsgemäßen Beschichtungsstoffe nach ihrer Aushärtung einen Speichermodul E' im gummielastischen Bereich von mindestens $10^{7,5}$ Pa und einen Verlustfaktor tan$\delta$ bei 20 °C von maximal 0,10 aufweisen, wobei der Speichermodul E' und der Verlustfaktor mit der Dynamisch-Mechanischen Thermo-Analyse an freien Filmen mit einer Schichtdicke von 40 $\pm$ 10 $\mu$m gemessen worden sind (vgl. hierzu das deutsche Patent DE 197 09 467 C2).

Die reaktiven funktionellen Gruppen (ii) mit mindestens einer mit aktinischer Strahlung aktivierbaren Bindung können in den (Meth)Acrylatcopolymerisaten (A) enthalten sein. Sind in den erfindungsgemäß zu verwendenden Beschichtungsstoffen keine weiteren mit aktinischer Strahlung härtbare Bestandteile enthalten, weisen die (Meth)Acrylatcopolymerisate (A) obligatorisch diese Gruppen (ii) auf.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe (ii) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe (ii) vorliegen. Erfindungsgemäß ist es von besonderem Vorteil zwei, insbesondere eine, Doppelbindung zu verwenden.

Das Dual-Cure-Bindemittel (A) enthält im statistischen Mittel mindestens eine der vorstehend beschriebenen mit aktinischer Strahlung aktivierbaren Gruppen (ii). Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist.

Werden im statistischen Mittel mehr als eine mit aktinischer Strahlung aktivierbare Gruppe (ii) pro Molekül angewandt, sind die Gruppen (ii) strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen (ii) verwendet werden, die sich von zwei, drei, vier oder mehr, insbesondere aber zwei, Monomerklassen ableiten.

Beispiele geeigneter Gruppen (ii) sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen (ii) über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Der Gehalt der erfindungsgemäßen Beschichtungsstoffe an den Bindemitteln (A) kann breit variieren und richtet sich in erster Linie nach der Funktionalität der Bindemittel (A) einerseits und der ggf. vorhandenen, nachstehend beschriebenen Verbindungen (C) andererseits. Vorzugsweise liegt der Gehalt, bezogen auf den Festkörper des erfindungsgemäßen Beschichtungsstoffs, bei 20 bis 99,8, bevorzugt 25 bis 95, besonders bevorzugt 30 bis 90, ganz besonders bevorzugt 35 bis 85 und insbesondere 40 bis 80 Gew.-%.

Vorzugsweise enthalten die erfindungsgemäßen Beschichtungsstoffe noch mindestens einen Bestandteil, ausgewählt aus der Gruppe, bestehend aus niedermolekularen und von den (Meth)Acrylatcopolymerisaten (A) verschiedenen, oligomeren und polymeren Verbindungen (C), die im statistischen Mittel

(i) mindestens eine, vorzugsweise mindestens zwei, der vorstehend beschriebenen reaktiven funktionellen Gruppen, die mit komplementären reaktiven funktionellen Gruppen, insbesondere Hydroxylgruppen, thermisch initiierte Vernetzungsreaktionen eingehen können, und/oder

(ii) mindestens eine, vorzugsweise mindestens zwei, der vorstehend beschriebenen reaktiven funktionellen Gruppen mit mindestens einer mit aktinischer Strahlung aktivierbaren Bindung

im Molekül aufweisen.

Enthält das vorstehend beschriebene (Meth)Acrylatcopolymerisat (A) keine der vorstehend beschriebenen, selbstvernetzenden reaktiven funktionellen Gruppen (i), enthält der erfindungsgemäß zu verwendende Dual-Cure-Beschichtungsstoff obligatorisch mindestens eine, insbesondere eine, niedermolekulare, oligomere und/oder polymere, insbesondere eine niedermolekulare oder oligomere, Verbindung (C) mit reaktiven funktionellen Gruppen (i), die mit Hydroxylgruppen thermisch initiierte Vernetzungsreaktionen eingehen können. Geeignete Verbindungen (C) dieser Art sind übliche und bekannte Vernetzungsmittel, wie sie beispielsweise aus der deutschen Patentanmeldung DE 199 24 171 A1, Seite 7, Zeile 38, bis Seite 8, Zeile 46, i.V.m. Seite 3, Zeile 43, bis Seite 5, Zeile 31, bekannt sind. Vorzugsweise werden blockierte, partiell blockierte oder unblockierte Polyisocyanate angewandt.

Enthält das vorstehend beschriebene (Meth)Acrylatcopolymerisat (A) keine der vorstehend beschriebenen reaktiven funktionellen Gruppen (ii) mit mindestens einer mit aktinischer Strahlung aktivierbaren Bindung, enthält der erfindungsgemäße Beschichtungsstoff obligatorisch mindestens eine niedermolekulare, oligomere und/oder polymere Verbindung (C) mit mindestens einer, vorzugsweise mindestens zwei, bevorzugt mindestens drei, besonders bevorzugt mindestens vier und insbesondere mindestens fünf reaktiven funktionellen Gruppen (ii).

Beispiele geeigneter niedermolekularer, oligomerer und/oder polymerer Verbindung (C) mit mindestens einer Gruppe (ii) werden im Detail in Römpp Lexikon Lacke und Druckfarben, Georg Thieme Verlag, Stuttgart, New York, 1998, »Reaktivverdünner« Seiten 491 und 492, in der deutschen Patentanmeldung DE 199 08 013 A1, Spalte 6, Zeile 63, bis Spalte 8, Zeile 65, in der deutschen Patentanmeldung DE 199 08 018 A1, Seite 11, Zeilen 31 bis 33, in der deutschen Patentanmeldung DE 198 18 735 A1, Spalte 7, Zeilen 1 bis 35, oder dem deutschen Patent DE 197 09 467 C1, Seite 4, Zeile 36, bis Seite 5, Zeile 56, beschrieben. Vorzugsweise werden Pentaerythrittetraacrylat, Dipentaerythritpentaacrylat und/oder aliphatische Urethanacrylate mit sechs Acrylatgruppen im Molekül eingesetzt.

Die erfindungsgemäßen Beschichtungsstoffe können an Stelle der vorstehend beschriebenen Verbindungen (C) oder anstelle von diesen mindestens eine, insbesondere mindestens zwei, niedermolekulare, oligomere und/oder polymere Verbindung(en) (C) mit mindestens einer, insbesondere mindestens zwei, Gruppe(n) (i) und mindestens einer, insbesondere mindestens zwei, Gruppe(n) (ii) enthalten. Beispiele geeigneter Verbindungen (C) dieser Art werden im Detail in der europäischen Patentanmeldung EP 0 928 800 A1, Seite 3, Zeilen 17 bis 54, und Seite 4, Zeilen 41 bis 54, oder in der deutschen Patentanmeldung DE 198 18 735 A1, Spalte 3, Zeile 16, bis Spalte 6, Zeile 33, beschrieben. Vorzugsweise werden Isocyanatoacrylate, die aus Polyisocyanaten und den vorstehend beschriebenen hydroxylgruppenhaltigen Monomeren (a1) und/oder (a2) herstellbar sind, verwendet.

Die erfindungsgemäßen Beschichtungsstoffe enthalten vorzugsweise mindestens einen Photoinitiator, vorzugsweise mindestens zwei und insbesondere drei Photoinitiatoren (D) in einer Menge von 0,2 bis 5, vorzugsweise 0,3 bis 4,8, bevorzugt 0,4 bis 4,6, besonders bevorzugt 0,5 bis 4,5 und insbesondere 0,5 bis 4,3 Gew.-%, jeweils bezogen auf den Festkörper des erfindungsgemäßen Beschichtungsstoffs.

Beispiele geeigneter Photoinitiatoren (D) werden in Römpp Lexikon Lacke und Druckfarben, Georg Thieme Verlag, Stuttgart, New York, 1998, Seiten 444 bis 446, beschrieben.

Photoinitatoren (D) sind handelsübliche Verbindungen und werden beispielsweise von der Firma BASF Aktiengesellschaft unter der Marke LUCIRIN®, von der Firma Ciba Specialty Chemicals unter der Marke IRGACURE® oder von der Firma Rahn unter der Marke LUCIRIN® vertrieben.

Darüber hinaus können die erfindungsgemäßen Beschichtungsstoffe noch mindestens einen Zusatzstoff (E), ausgewählt aus der Gruppe, bestehend aus thermisch härtbaren Reaktiwerdünnern; molekulardispers löslichen Farbstoffen; Lichtschutzmitteln, wie UV-Absorber und reversible Radikalfänger (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln, enthalten.

Beispiele geeigneter Zusatzstoffe (E) werden im Detail in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, in der deutschen Patentanmeldung DE 199 14 896 A1, Spalte 14, Seite 26, bis Spalte 15, Zeile 46, oder in der deutschen Patentanmeldung DE 199 08 018 A1, Seite 9, Zeile 31, bis Seite 8, Zeile 30, im Detail beschrieben. Ergänzend wird noch auf die deutschen Patentanmeldungen DE 199 04 317 A1 und DE 198 55 125 A1 verwiesen.

Die erfindungsgemäßen Beschichtungsstoffe, die die vorstehend beschriebenen Bestandteile (A) und (B) sowie

ggf. (C), (D) und/oder (E) enthalten, werden insbesondere als erfindungsgemäße Klarlacke für die Herstellung von Klarlackierungen verwendet.

Die pigmentierten erfindungsgemäßen Beschichtungsstoffe enthalten darüber hinaus noch mindestens ein Pigment (F), ausgewählt aus der Gruppe, bestehend aus organischen und anorganischen, transparenten und deckenden, farb- und/oder effektgebenden, elektrisch leitfähigen, magentisch abschirmenden und fluoreszierenden Pigmenten, Füllstoffen und Nanopartikeln.

Die pigmentierten erfindungsgemäßen Beschichtungsstoffe werden insbesondere als erfindungsgemäße Füller, Basislacke und Unidecklacke zur Herstellung von erfindungsgemäßen Füllerlackierungen oder Steinschlagschutzgrundierungen, Basislackierungen und Unidecklackierungen eingesetzt.

Werden ausschließlich nicht deckende, transparente Pigmente (F), insbesondere Nanopartikel (F), verwendet, können die pigmentierten erfindungsgemäßen Beschichtungsstoffe auch als Klarlacke verwendet werden.

Methodisch weist die Herstellung der erfindungsgemäßen Beschichtungsstoffe keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, Inline-Dissolver, statische Mischer, Zahnkranzdispergatoren, Druckentspannungsdüsen und/oder Microfluidizer vorzugsweise unter Ausschluß von aktinischer Strahlung.

Die resultierenden erfindungsgemäßen Beschichtungsstoffe können konventionelle, organische Lösemittel enthaltende Beschichtungsstoffe, wäßrige Beschichtungsstoffe, im wesentlichen oder völlig lösemittel- und wasserfreie flüssige Beschichtungsstoffe (100%-Systeme), im wesentlichen oder völlig lösemittel- und wasserfreie feste Beschichtungsstoffe (Pulverlacke) oder im wesentlichen oder völlig lösemittelfreie Pulverlacksuspensionen (Pulverslurries) sein. Außerdem können sie Einkomponentensysteme, in denen die Bindemittel (A) und die Vernetzungsmittel (C) nebeneinander vorliegen, oder Zwei- oder Mehrkomponentensysteme, in denen die Bindemittel (A) und die Vernetzungsmittel (C) bis kurz vor der Applikation getrennt voneinander vorliegen, sein.

Methodisch weist die Applikation der im erfindungsgemäßen Verfahren zu verwendenden Dual-Cure-Beschichtungsstoffe keine Besonderheiten auf, sondern kann durch alle üblichen und bekannten, für den jeweiligen Beschichtungsstoff geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen, es sei denn es handelt sich um Pulverlacke.

Auch die Applikation der Pulverlacke weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich unter Ausschluß von aktinischer Strahlung zu arbeiten, um eine vorzeitige Vernetzung der erfindungsgemäßen Beschichtungsstoffe zu vermeiden.

Die Härtung der im erfindungsgemäßen Verfahren angewandten Dual-Cure-Beschichtungsstoffe erfolgt im allgemeinen nach einer gewissen Ruhezeit oder Ablüftzeit. Sie kann eine Dauer von 5 s bis 2 h, vorzugsweise 1 min bis 1 h und insbesondere 1 bis 45 min haben. Die Ruhezeit dient beispielsweise zum Verlauf und zur Entgasung der Lackschichten und zum Verdunsten von flüchtigen Bestandteilen wie gegebenenfalls vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Diese Verfahrensmaßnahme kann bei Naß-in-naß-Verfahren auch zur Trocknung der applizierten Lackschichten, insbesondere Elektrotauchlackschichten, Füllerschichten und/oder Basislackschichten, angewandt, die nicht oder nur partiell gehärtet werden sollen.

Die thermische Härtung erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Vorzugsweise wird bei der Härtung mit aktinischer Strahlung, insbesondere UV-Strahlung, eine Dosis von 500 bis 4.000, bevorzugt 1.000 bis 2.900, besonders bevorzugt 1.200 bis 2.800, ganz besonders bevorzugt 1.300 bis 2.700 und insbesondere 1.400 bis 2.600 $mJ/cm^2$ angewandt.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt- , Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, oder in der deutschen Patentanmeldung DE 198 18 735 A1, Spalte 10, Zeile 31, bis Spalte 11, Zeile 16, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß beispielsweise abwechselnd mit UV-Strahlung und Elektronenstrahlung gehärtet wird.

Die thermische Härtung und Härtung mit aktinischer Strahlung können gleichzeitig oder nacheinander angewandt werden. Werden die beiden Härtungsmethoden nacheinander angewandt, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Die Härtung mit aktinischer Strahlung wird vorzugsweise unter Inertgas durchgeführt, um die Bildung von Ozon zu vermeiden. Anstelle eines reinen Intertgases kann eine sauerstoffabgereicherte Atmosphäre verwendet werden

"Sauerstoffabgereichert" bedeutet, daß der Gehalt der Atmosphäre an Sauerstoff geringer ist als der Sauerstoffgehalt von Luft (20,95 Vol.-%). Vorzugsweise liegt der maximale Gehalt der sauerstoffabgereicherten Atmosphäre bei 18, bevorzugt 16, besonders bevorzugt 14, ganz besonders bevorzugt 10 und insbesondere 6,0 Vol-%. Vorzugsweise liegt der minimale Gehalt an Sauerstoff bei 0,1, bevorzugt 0,5, besonders bevorzugt 1,0, ganz besonders bevorzugt 1,5 und insbesondere 2,0 Vol-%.

Die sauerstoffabgereicherte Atmosphäre kann in unterschiedlicher Weise bereitgestellt werden. Beispielsweise kann ein entsprechendes Gasgemisch hergestellt und in Druckflaschen zur Verfügung gestellt werden. Vorzugsweise wird die Abreicherung erzielt, indem man mindestens ein Inertgas in den jeweils erforderlichen Mengen in das über der Oberfläche der zu härtenden Dual-Cure-Schichten (2) befindliche Luftpolster einbringt. Der Sauerstoffgehalt der über der betreffenden Oberfläche befindlichen Atmosphäre kann mit Hilfe üblicher und bekannter Methoden und Vorrichtungen zur Bestimmung von elementarem Sauerstoff kontinuierlich gemessen und ggf. automatisch auf den erwünschten Wert eingestellt werden.

Unter Inertgas wird ein Gas verstanden, das unter den angewandten Härtungsbedingungen durch die aktinische Strahlung nicht zersetzt wird, die Härtung nicht inhibiert und/oder nicht mit dem erfindungsgemäßen Beschichtungsstoff reagiert. Vorzugsweise werden Stickstoff, Kohlendioxid, Helium, Neon oder Argon, insbesondere Stickstoff und/oder Kohlendioxid, verwendet.

Die vorstehend beschriebenen Verfahren und Vorrichtung der Applikation und Härtung können auch bei nicht erfindungsgemäßen Beschichtungsstoffen, wie Elektrotauchlacke, Füller oder Basislacke, eingesetzt werden, die zusammen mit den erfindungsgemäßen Beschichtungsstoffen zur Herstellung von mehrschichtigen Klarlackierungen und farb- und/oder effektgebenden Mehrschichtlackierungen angewandt werden.

Beispiele geeigneter Elektrotauchlacke sowie ggf. von Naß-in-naß-Verfahren werden in der japanischen Patentanmeldung 1975-142501 (japanische Offenlegungsschrift JP 52-065534 A2, Chemical Abstracts Referat Nr. 87: 137427) oder den Patentschriften und -anmeldungen US 4,375,498 A1, US 4,537,926 A1, US 4,761,212 A1, EP 0 529 335 A1, DE 41 25 459 A1, EP 0 595 186 A1, EP 0 074 634 A1, EP 0 505 445 A1, DE 42 35 778 A1, EP 0 646 420 A1, EP 0 639 660 A1, EP 0 817 648 A1, DE 195 12 017 C1, EP 0 192 113 A2, DE 41 26 476 A1 oder WO 98/07794 beschrieben.

Geeignete Füller, insbesondere wäßrige Füller, die auch als Steinschlagschutzgrundierungen oder Funktionsschichten bezeichnet werden, sind aus den Patentschriften und -anmeldungen US 4,537,926 A1, EP 0 529 335 A1, EP 0 595 186 A1, EP 0 639 660 A1, DE 44 38 504 A1, DE 43 37 961 A1, WO 89,/10387, US 4,450,200 A1, US 4,614,683 A1 oder WO 490/26827 bekannt.

Geeignete Basislacke, insbesondere Wasserbasislacke, sind aus den Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1,EP0708788A1,EP0593454A1,DE-A-4328092A1,EP0299 148 A1, EP 0 394 737 A1, EP 0 590 484 A1, EP 0 234 362 A1, EP 0 234 361 A1, EP 0 543 817 A1, WO 95/14721, EP 0 521 928 A1, EP 0 522420A1,EP0522419A1,EP0649865A1,EP0536712A1,EP 0596460A1,EP0596461A1,EP-0584818A1,EP0669356A1, EP 0 634 431 A1, EP 0 678 536 A1, EP 0 354 261 A1, EP 0 424 705 A1, WO 97/49745, WO 97/49747, EP 0 401 565 A1 oder EP 0 817 684, Spalte 5, Zeilen 31 bis 45, bekannt.

Die erhaltenen erfindungsgemäßen Beschichtungen, insbesondere die erfindungsgemäßen ein- oder mehrschichtigen, farb- und/oder effektgebenden Lackierungen und Klarlackierungen sind einfach herzustellen und weisen hervorragende optische Eigenschaften und eine sehr hohe Überbrennstabilität, Licht-, Chemikalien-, Wasser-, Schwitzwasser-, Witterungs-, Vergilbungs- und Etch-Beständigkeit auf. Insbesondere sind sie frei von Trübungen und Inhomogenitäten. Sie weisen einen sehr gutes Reflow-Verhalten und eine hervorragende Kratzfestigkeit bei einer hohen Härte

auf.

Vorzugsweise liegen die Schichtdicken der erfindungsgemäßen und nicht erfindungsgemäßen Beschichtungen in den üblicherweise angewandten Bereichen:

Elektrotauchlackierung:

Vorzugsweise 10 bis 60, bevorzugt 15 bis 50 und insbesondere 15 bis 40 µm;

Füllerlackierung:

Vorzugsweise 20 bis 150, bevorzugt 25 bis 100 und insbesondere 30 bis 80 µm;

Basislackierung:

Vorzugsweise 5 bis 30, bevorzugt 7,5 bis 25 und insbesondere 10 bis 20 µm;

Unidecklackierung:

Vorzugsweise 10 bis 60, bevorzugt 15 bis 50 und insbesondere 15 bis 40 µm;

Klarlackierung:

Vorzugsweise 10 bis 100, bevorzugt 15 bis 80 und insbesondere 20 bis 70 µm;

Ein weiterer Vorteil der erfindungsgemäßen Beschichtungsstoffe ist, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen liefern, deren anwendungstechnisches Eigenschaftsprofil an das der Beschichtungen außerhalb der Schattenzonen zumindest heranreicht. Dadurch werden die in den Schattenzonen befindlichen Beschichtungen auch nicht mehr leicht durch mechanische und/oder chemische Einwirkung geschädigt, was beispielsweise in der Linie beim Einbau weiterer Bestandteile von Kraftfahrzeugen in die beschichteten Karosserien eintreten kann.

Vor allem aber zeichnen sich die erfindungsgemäßen Beschichtungen durch eine hervorragende Benetzbarkeit aus, die es ermöglicht, großflächige Reparaturlackierungen und Doppellackierungen problemlos aufzutragen, ohne daß zuvor die vorstehend beschriebenen physikalischen, mechanischen und/oder cemischen Behandlungen durchgeführt werden müßten. Dabei können erfindungsgemäße Klarlacke auf erfindungsgemäße Klarlackierungen oder nicht erfindungsgemäße oder erfindungsgemäße Basislackierungen und erfindungsgemäße Klarlackierungen auf die erfindungsgemäße Klarlackierung aufgetragen werden. In gleicher Weise können erfindungsgemäße Unidecklackierungen mit erfindungsgemäßen Unidecklackierungen beschichtet werden. Falls notwendig, können auch die Füller in die Reparaturlackierung oder Doppellackierung einbezogen werden. Weitere Kombinationsmöglichkeiten liegen für den Fachmann auf der Hand und müssen nicht expressis verbis aufgezählt werden.

Die für die Reparaturlackierung oder Doppellackierung verwendeten erfindungsgemäßen oder nicht erfindungsgemäßen Beschichtungsstoffe müssen nicht notwendigerweise stofflich identisch oder im wesentlichen identisch mit denen der Erstlackierung sein. Wichtig ist, daß sie und die hieraus hergestellten Beschichtungen dasselbe anwendungstechnische Eigenschaftsprofil haben, so daß sich beispielsweise keine Farbtonabweichungen zwischen Reparaturlakkierung oder Doppellackierung einerseits und Erstlackierung andererseits ergeben.

Nach der Dual-Cure-Härtung resultieren Reparaturlackierungen und Doppellackierungen die außerordentlich fest auf den Erstlackierungen haften und auch nach der Schwitzwasserbelastung nicht delaminieren und dabei dieselben vorteilhaften Eigenschaften wie die Erstlackierungen haben.

Die erfindungsgemäßen Beschichtungsstoffe können aber auch als Klebstoffe und Dichtungsmassen zur Herstellung erfindungsgemäßer Klebschichten und Dichtungen verwendet werden und dienen dem Beschichten, Verkleben und/oder Abdichten von grundierten oder ungrundierten Substraten aus Metall, Kunststoff, Glas, Holz, Textil, Leder, Natur- und Kunststein, Beton, Zement oder Verbunden dieser Materialien.

Die erfindungsgemäßen Beschichtungsstoffe, Klebstoffe oder Dichtungsmassen können daher für das Lakkieren, Verkleben und Abdichten von Kraftfahrzeugkarosserien und Teilen hiervon, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung von Kleinteilen, Coils, Container, Emballagen, elektrotechnischen Bauteilen und weißer Ware mit großem Erfolg verwendet werden.

Die Substrate können grundiert sein.

Im Falle von Kunststoffen können übliche und bekannte Primerschichten oder Haftschichten als Grundierungen

angewandt werden oder die Kunststoffoberflächen können durch Beflammen oder Ätzen mit reaktiven Verbindungen wie Fluor haftfest ausgerüstet sein.

Im Falle elektrisch leitfähiger Substrate, insbesondere Metallen, können Primer als Grundierungen verwendet werden, wie sie in Römpp Lexikon Lacke und Druckfarben, Georg Thieme Verlag, Stuttgart, New York, 1998, "Primer", Seite 473, ,,Wash Primer", Seite 618, oder "Fertigungsbeschichtung", Seite 230, beschrieben werden.

Bei elektrisch leitfähigen Substraten auf der Basis von Aluminium wird als Grundierung vorzugsweise eine durch anodische Oxidation erzeugte Aluminiumoxidschicht verwendet.

Wegen der hervorragenden anwendungstechnischen Eigenschaften der erfindungsgemäßen Beschichtungen, Klebschichten und Dichtungen sind die Substrate, die hiermit beschichtet, verklebt und/oder abgedichtet sind, von besonders langer Gebrauchsdauer und daher für die Anwender wirtschaftlich, ökologisch und technisch besonders wertvoll.

**Beispiele und Vergleichsversuche**

**Herstellbeispiel 1**

**Die Herstellung eines thermisch härtbaren Bindemittels**

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflußkühler, wurde 650 Gewichtsteile einer Fraktion aromatischer Kohlenwasserstoffe mit einem Siedebereich von 158 bis 172 ˚C eingewogen. Das Lösemittel wurde auf 140 ˚C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteile Acrylsäure innerhalb von vier Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach der Beendigung des Initiatorzulaufs wurde die resultierende Reaktionsmischung während weiterer zwei Stunden auf 140 ˚C unter Rühren erhitzt und anschließend abgekühlt. Die resultierende Lösung des Methacrylatcopolymerisats (A) wurde mit einem Gemisch aus 1-Methoxypropylacetat-2, Butylglykolacetat und Butylacetat verdünnt. Die resultierende Lösung wies einen Feststoffgehalt von 65 Gew.-%, bestimmt in einem Umluftofen (eine Stunde/130 ˚C) und eine Säurezahl von 15 mg KOH/g Festkörper auf.

**Beispiel 1 und Vergleichsversuche V1 und V2**

**Die Herstellung eines erfindungsgemäßen Klarlacks (Beispiel 1) und nicht erfindungsgemäßer Dual-Cure-Klarlacke (Vergleichsversuche V1 und V2)**

Die Dual-Cure-Klarlacke 1, V1 und V2 wurden durch das Vermischen der in der Tabelle angegebenen Bestandteile in der angegebenen Reihenfolge und Homogenisieren der resultierende Mischung hergestellt.

**Tabelle: Die stofflichen Zusammensetzungen der Dual-Cure-Klarlacke 1, V1 und V2**

| **Bestandteil** | **Gewichtsteile** | | |
|---|---|---|---|
| | **1 V2** | **V1** | |
| Stammlack: | | | |
| Bindemittel des Herstellbeispiels 1 | 35,9<br>35,9 | 35,9 | |
| Dipentaerythritpentaacrylat | 20<br>20 | 20 | |
| UV-Absorber (substituiertes Hydroxyphenyltriazin) | 1,0<br>1,0 | 1,0 | |
| HALS (N-Methyl-2,2,6,6-tetramethylpiperidinylester) | 1,0<br>1,0 | 1,0 | |
| Silikonadditiv (Byk ® 306 der Firma Byk Chemie) | - | 0,4 | - |

(fortgesetzt)

| **Bestandteil** | **Gewichtsteile 1** | **V2** | **V1** |
|---|---|---|---|
| Stammlack: | | | |
| **Additiv (B) (Byk ® 358 der Firma Byk Chemie)** | **0,2** | - | - |
| Butylacetat | 27,6 | 27,4 | 27,8 |
| Solventnaphtha® | 10,8 | 10,8 | 10,8 |
| Irgacure® 184 (handelsüblicher Photoinitiator der Firma Ciba Specialty Chemicals) | 2,0 | 2,0 | 2,0 |
| Genocure ® MBF (handelsüblicher Photoinitiator der Firma Rahn) | 1,0 | 1,0 | 1,0 |
| Lucirin ® TPO (handelsüblicher Photoinitiator der Firma BASF AG) | 0,5 | 0,5 | 0,5 |
| **Summe:** | **100** | **100** | **100** |
| Vernetzungsmittelkomponente (B): | | | |
| **Summe:** | **38,28** | **38,28** | **38,28** |
| Vernetzungsmittel (B1): | | | |
| Isocyanatoacrylat Roskydal ® UA VPLS 2337 der Firma Bayer AG (Basis: Trimeres Hexamethylendiisocyanat; Gehalt an Isocyanatgruppen: 12 Gew.-%) | 27,84 | 27,84 | 27,84 |
| Vernetzungsmittel (B 2): | | | |
| Isocyanatoacrylat auf der Basis des Trimeren von Isophorondiisocyanat (70,5 %ig in Butylacetat; Viskosität: 1.500 mPas; Gehalt an Isocyanatgruppen: 6,7 Gew.-%; hergestellt analog Beispiel 1 der EP 0 928 800 A1) | 6,96 | 6,96 | 6,96 |
| Verdünner | 3,48 | 3,48 | 3,48 |

**Beispiel 2 und Vergleichsversuche V 3 und V4**

**Die Herstellung einer erfindungsgemäßen Mehrschichtlackierung (Beispiel 2) und nicht erfindungsgemäßer Mehrschichtlackierungen (Vergleichsversuche V3 und V4)**

Für das Beispiel 2 wurde der Klarlack des Beispiels 1 verwendet.

Für den Vergleichsversuch V 3 wurde der Klarlack des Vergleichsversuchs V1 verwendet.

Für den Vergleichsversuch V 4 wurde der Klarlack des Vergleichsversuchs V2 verwendet.

Zur Herstellung der Mehrschichtlackierungen 2, V3 und V4 wurden Stahltafeln nacheinander mit einer kathodisch abgeschiedenen und während 20 Minuten bei 170 °C eingebrannten Elektrotauchlackierung einer Trockenschichtdicke von 18 bis 22 µm beschichtet. Anschließend wurden die Stahltafeln mit einem handelsüblichen Zweikomponenten-Wasserfüller von BASF Coatings AG, wie er üblicherweise für Kunststoffsubstrate verwendet wird, beschichtet. Die resultierende Füllerschicht wurde während 30 Minuten bei 90 °C eingebrannt, so daß eine Trockenschichtdicke von 35 bis 40 µm resultierte. Hiernach wurde ein handelsüblicher schwarzer Wasserbasislack von BASF Coatings AG mit einer Schichtdicke von 12 bis 15 µm appliziert, wonach die resultierenden Wasserbasislackschichten während zehn Minuten bei 80 °C abgelüftet wurden. Anschließend wurden die Klarlacke mit einer Schichtdicke von 40 bis 45 µm in einem Kreuzgang mit einer Fließbecherpistole pneumatisch appliziert. Die Härtung der Wasserbasislackschichten und der Klarlackschichten erfolgte während 5 Minuten bei Raumtemperatur, während 10 Minuten bei 80 °C, gefolgt von einer Bestrahlung mit UV-Licht einer Dosis von 1.500 mJ/cm$^2$, und abschließend während 20 Minuten bei 140 °C.

Die Mehrschichtlackierungen 2, V3 und V4 wiesen, was Glanz, Härte und Kratzfestigkeit betrifft ein sehr gutes Eigenschaftsprofil auf.

Sie waren sehr brillant und wiesen einen Glanz (20 °) nach DIN 67530 von 90 auf. Die Mikroeindringhärte (Universalhärte bei 25,6 mN, Fischerscope 100V mit Diamantenpyramide nach Vickers) lag bei 137 bis 139.

Die Kratzfestigkeit wurde mit Hilfe des Sandtests (vgl. die deutsche Patentanmeldung DE 198 39 453 A1, Seite 9, Zeilen 1 bis 63) anhand der vorstehend beschriebenen Prüfbleche beurteilt. Der Glanzverlust lag bei 10 Einheiten (20°).

Außerdem wurde die Kratzfestigkeit mit Hilfe des Bürstentests (vgl. die deutsche Patentanmeldung DE 198 39 453 A1, Seite 9, Zeilen 17 bis 63) anhand der vorstehend beschriebenen Prüfbleche beurteilt. Der Glanzverlust lag bei 4 Einheiten (20°).

Bei dem in der Fachwelt bekannten MB-Gradientenofentest zeigten sich erste Beschädigungen der erfindungsgemäßen Mehrschichtlackierungen durch Schwefelsäure erst ab einer Temperatur von 53 °C und durch Baumharz erst ab 55 °Celsius. Auch die Etch-Beständigkeit war hervorragend.

Die Mehrschichtlackierungen 2 und V3 wiesen einen sehr guten Verlauf und eine von Störungen freie Oberfläche ohne Kocher auf. Die Mehrschichtlackierung V4 wies in ihrer Oberfläche Nadelstiche und andere Verlaufstörungen auf.

Die Zwischenschichthaftung war sehr gut (Gitterschnittprüfung nach DIN EN ISO 2409: GTO-1).

Signifikante Unterschiede ergaben sich aber bei der Haftung zwischen der erfindungsgemäßen Mehrschichtlackierung 2 und ihren Reparaturlackierungen einerseits und den nicht erfindungsgemäßen Mehrschichtlackierungen V3 und V4 und ihren Reparaturlackierungen andererseits sowohl bei dem Aufbau

- Basislackierung (Original) / Klarlackierung (Original) / Basislackierung (Reparatur) / Klarlackierung (Reparatur) (= Doppellackierung)

als auch bei dem Aufbau

- Basislackierung (Original) / Klarlackierung (Original) / Klarlackierung (Reparatur) (= Klarlackreparatur),

wenn die Klarlackierungen der Originallackierungen vor der Applikation der Reparaturlackierungen nicht angeschliffen worden waren.

Die Tabelle 2 gibt einen Überblick über die Ergebnisse der Gitterschnittprüfung nach DIN EN ISO 2409 nach fünftägiger Alterung der Prüfbleche. Die Haftung gemäß der Gitterschnittprüfung wurde wie folgt benotet:

GT0-1 = i.O., keine oder nur sehr geringe Enthaftung (kleine Splitter an den Schnitträndern);
GT2 = gerade noch i.O., geringfügige Enthaftung, ca. 15 % der Teilstücke;
GT3-4 = n.i.O., größere Enthaftungsflächen, ca. 35 bis 65% der Teilstücke;
GT5 = vollständige Enthaftung.

**Tabelle 2: Gitterschnittprüfung an Prüfblechen des Beispiels 2 und der Vergleichsversuche V3 und V4**

| Aufbau | Beispiel 2 | Vergleichsversuche | |
|---|---|---|---|
| | | V3 | V4 |
| Doppellackierung | GT1-2 | GT5 | GT0-1 |

(fortgesetzt)

| Aufbau | Beispiel 2 | Vergleichsversuche | |
|---|---|---|---|
| | | V3 | V4 |
| Klarlackreparatur | GT2 | n.m. [a)] | GT2 |

a) nicht messbar, keine Überlackierung möglich, da der Reparaturklarlack die Original-Klarlackierung nicht benetzte;

## Patentansprüche

**1.** Thermisch und mit aktinischer Strahlung härtbare Beschichtungsstoffe, enthaltend

(A) mindestens ein Bindemittel, ausgewählt aus der Gruppe, bestehend aus statistisch, alternierend und blockartig aufgebauten, linearen, verzweigten und kammartig aufgebauten, thermisch und thermisch und mit aktinischer Strahlung härtbaren Polyadditionsharzen und Polykondensationsharzen sowie (Co)Polymerisaten von olefinisch ungesättigten Monomeren;
und
(B) 0,01 bis 3 Gew.-%, bezogen auf den Festkörper des Beschichtungsstoffs, mindestens eines Additivs auf Basis mindestens eines (Meth)Acrylat(co)polymerisats, ausgewählt aus der Gruppe, bestehend aus (Meth) Acrylat(co)polymerisaten eines zahlenmittleren Molekulargewichts von 4.000 bis 100.000 Dalton und einer niedrigen bis hohen Polarität

**2.** Beschichtungsstoff nach Anspruch 2, **dadurch gekennzeichnet, daß** das Additiv ein (Meth)acrylatcopolymerisat (B) enthält.

**3.** Beschichtungsstoff nach Anspruch 1 oder 2, **dadurch gekennzeichnet, daß** das (Meth)Acrylatcopolymerisat (B) ein zahlenmittleres Molekulargewicht von 4.500 bis 40.000 Dalton und eine niedrige bis mittlere Polarität hat.

**4.** Beschichtungsstoff nach einem der Ansprüche 1 bis 3, **dadurch gekennzeichnet, daß** das Additiv (B) mindestens ein organisches Lösemittel für das (Meth)Acrylat(co)polymerisat (B) enthält.

**5.** Beschichtungsstoff nach Anspruch 4, **dadurch gekennzeichnet, daß** der Festkörpergehalt des Additivs (B), bezogen auf seine Gesamtmenge, bei 10 bis 80 Gew.-% liegt.

**6.** Beschichtungsstoffe nach einem der Ansprüche 1 bis 5, **dadurch gekennzeichnet, daß** das Bindemittel (A) aus der Gruppe, bestehend aus (Meth)Acrylatcopolymerisaten, die eine OH-Zahl von 100 bis 220 mg KOH/g, eine Glasübergangstemperatur von -35 bis +60˚C, ein zahlenmittleres Molekulargewicht von 1.000 bis 10.000 Dalton und ein massenmittleres Molekulargewicht von 2.000 bis 40.000 Dalton aufweisen und die eine der OH-Zahl entsprechende Menge an hydroxylgruppenhaltigen olefinisch ungesättigten Monomeren (a) einpolymerisiert enthalten, wovon

(a1) 20 bis 90 Gew.-%, bezogen auf die hydroxylgruppenhaltigen Monomeren (a), aus der Gruppe, bestehend aus 4-Hydroxybutyl(meth)acrylat und/oder 2-Alkyl-propan-1,3-diol-mono(meth)acrylat, und
(a2) 10 bis 80 Gew.-%, bezogen auf die hydroxylruppenhaltigen Monomeren (a), aus der Gruppe, bestehend aus sonstigen hydroxylgruppenhaltigen olefinisch ungesättigten Monomeren,

ausgewählt werden.

**7.** Beschichtungsstoffe nach einem der Ansprüche 1 bis 6, **dadurch gekennzeichnet, daß** die 2-Alkyl-propan-1,3-diol-mono(meth)acrylate (a1) aus der Gruppe, bestehend aus 2-Methyl-, 2-Ethyl-, 2-Propyl-, 2-Isopropyl- oder 2-n-Butyl-propan-1,3-diol-mono(meth)acrylat, ausgewählt werden.

**8.** Beschichtungsstoffe nach Anspruch 7, **dadurch** gekennzeichet, daß 2-Methyl-1,3-diol-mono(meth)acrylat (a1) verwendet wird.

**9.** Beschichtungsstoffe nach einem der Ansprüche 1 bis 8, **dadurch gekennzeichnet, daß** die Monomeren (a2) aus der Gruppe, bestehend aus Hydroxyalkylestern von olefinisch ungesättigen Carbon-, Sulfon- und Phosphonsäuren

und sauren Phosphor- und Schwefelsäureestern, Allylalkohol, ethoxyliertem und propoxyliertem Allylalkohol und Umsetzungsprodukten von olefinisch ungesättigen Carbon-, Sulfon- und Phosphonsäuren und sauren Phosphor- und Schwefelsäureestern mit dem Glycidylester einer in alpha-Stellung verzweigten Monocarbonsäure mit 5 bis 18 Kohlenstoffatomen im Molekül, ausgewählt werden.

**10.** Beschichtungsstoffe nach einem der Ansprüche 1 bis 9, **dadurch gekennzeichnet, daß** die (Meth)Acrylatcopolymerisate (A) im statistischen Mittel

(i) mindestens eine von der Hydroxylgruppe verschiedene reaktive funktionelle Gruppe im Molekül, die mit sich selbst oder mit komplementären reaktiven funktionellen Gruppen thermisch initiierte Vernetzungsreaktionen eingehen, und/oder
(ii) mindestens eine reaktive funktionelle Gruppe mit mindestens einer mit aktinischer Strahlung aktivierbaren Bindung aufweist,

im Molekül aufweisen.

**11.** Beschichtungsstoffe nach einem der Ansprüche 1 bis 10, **dadurch gekennzeichnet, daß** die Beschichtungsstoffe noch mindestens einen Bestandteil, ausgewählt aus der Gruppe, bestehend aus niedermolekularen und von den (Meth)Acrylatcopolymerisaten (A) verschiedenen oligomeren und polymeren Verbindungen (C), die im statistischen Mittel

(i) mindestens eine reaktive funktionelle Gruppe, die mit komplementären reaktiven funktionellen Gruppen thermisch initiierte Vernetzungsreaktionen eingehen können, und/oder
(ii) mindestens eine reaktive funktionelle Gruppe mit mindestens einer mit aktinischer Strahlung aktivierbaren Bindung

im Molekül aufweisen, enthalten.

**12.** Beschichtungsstoffe nach Anspruch 10 oder 11, **dadurch gekennzeichnet, daß** die mit aktinscher Strahlung aktivierbaren Bindungen aus der Gruppe, bestehend aus Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen, ausgewählt werden.

**13.** Beschichtungsstoffe nach Anspruch 12, **dadurch gekennzeichnet, daß** die Doppelbindungen Kohlenstoff-Kohlenstoff-Doppelbindungen ("Doppelbindungen") sind.

**14.** Beschichtungsstoffe nach Anspruch 13, **dadurch gekennzeichnet, daß** die reaktiven funktionellen Gruppen (ii), aus der Gruppe, bestehend aus (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl-oder Butenylethergruppen oder Dicyclopentadienyl-, Norbornenyl-, Isoprenyl-, Isopropenyl-, Allyl- oder Butenylestergruppen, ausgewählt werden.

**15.** Beschichtungsstoffe nach Anspruch 14, **dadurch gekennzeichnet, daß** Acrylatgruppen (ii) verwendet werden.

**16.** Beschichtungsstoffe nach einem der Ansprüche 10 bis 15, **dadurch gekennzeichnet, daß** die komplementären reaktiven funktionellen Gruppen (i) zum einen aus der Gruppe, bestehend aus Thiol-, Amino-, N-Methylolamino-, N-Alkoxymethylamino-, Imino-, Carbamat-, Allophanat- und/oder Carboxylgruppen, und zum anderen aus der Gruppe bestehend aus Anhydrid-, Carboxyl-, Epoxy-, blockierten und unblockierten Isocyanat-, Urethan-, Alkoxycarbonylamino- Methylol-, Methylolether-, Carbonat-, Amino-und/oder beta-Hydroxyalkylamidgruppen, ausgewählt werden.

**17.** Beschichtungsstoffe nach einem der Ansprüche 1 bis 18, **dadurch gekennzeichnet, daß** sie 0,2 bis 5 Gew.-%, bezogen auf den Festkörper des Beschichtungsstoffs, mindestens eines Photoinitiators (D) enthalten.

**18.** Beschichtungsstoffe nach einem der Ansprüche 1 bis 17, **dadurch gekennzeichnet, daß** die Beschichtungsstoffe mindestens einen von den Additiven (B) verschiedenen Zusatzstoff (E), ausgewählt aus der Gruppe, bestehend aus physikalisch oder rein thermisch härtbaren, von den Bindemitteln (A) und dem Additiven (B) verschiedenen Bindemitteln; thermisch härtbaren Reaktivverdünnern; molekulardispers löslichen Farbstoffen; Lichtschutzmitteln,

wie UV-Absorber und reversible Radikalfänger (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln, enthalten.

**19.** Beschichtungsstoffe nach einem der Ansprüche 1 bis 18, **dadurch gekennzeichnet, daß** die Beschichtungsstoffe mindestens ein Pigment (F), ausgewählt aus der Gruppe, bestehend aus organischen und anorganischen, transparenten und deckenden, farb- und/oder effektgebenden, elektrisch leitfähigen, magentisch abschirmenden und fluoreszierenden Pigmenten, Füllstoffen und Nanopartikeln, enthalten.

**20.** Verwendung der Beschichtungsstoffe gemäß einem der Ansprüche 1 bis 19 als Beschichtungsstoffe. Klebstoffe und Dichtungsmassen.

## Claims

**1.** Coating materials curable thermally and with actinic radiation, comprising

(A) at least one binder selected from the group consisting of random, alternating and block, linear, branched and comb polyaddition resins, polycondensation resins, and addition (co)polymers of olefinically unsaturated monomers, curable thermally, and thermally and with actinic radiation;
and
(B) from 0.01 to 3% by weight, based on the solids of the coating material, of at least one additive based on at least one (meth)acrylate (co)polymer selected from the group consisting of (meth)acrylate (co)polymers having a number-average molecular weight of from 4 000 to 100 000 daltons and a low to high polarity.

**2.** Coating material according to Claim 1, **characterized in that** the additive comprises a (meth)acrylate copolymer (B).

**3.** Coating material according to Claim 1 or 2, **characterized in that** the (meth)acrylate copolymer (B) has a number-average molecular weight of from 4 500 to 40 000 daltons and a low to moderate polarity.

**4.** Coating material according to any one of Claims 1 to 3, **characterized in that** the additive (B) comprises at least one organic solvent for the (meth)acrylate (co)polymer (B).

**5.** Coating material according to Claim 4, **characterized in that** the solids content of the additive (B), based on its overall amount, is from 10 to 80% by weight.

**6.** Coating materials according to any one of Claims 1 to 5, **characterized in that** the binder (A) is selected from the group consisting of (meth)acrylate copolymers which have an OH number of from 100 to 220 mg KOH/g, a glass transition temperature of from -35 to +60°C, a number-average molecular weight of from 1 000 to 10 000 daltons and a mass-average molecular weight of from 2 000 to 40 000 daltons and which contain in copolymerized form an amount of hydroxyl-containing olefinically unsaturated monomers (a) that corresponds to the OH number, of which

(a1) from 20 to 90% by weight, based on the hydroxyl-containing monomers (a), are selected from the group consisting of 4-hydroxybutyl (meth)acrylate and/or 2-alkylpropane-1,3-diol mono(meth)-acrylate, and
(a2) from 10 to 80% by weight, based on the hydroxyl-containing monomers (a), are selected from the group consisting of other hydroxyl-containing olefinically unsaturated monomers.

**7.** Coating materials according to any one of Claims 1 to 6, **characterized in that** the 2-alkylpropane-1,3-diol mono (meth)acrylates (a1) are selected from the group consisting of 2-methyl-, 2-ethyl-, 2-propyl-, 2-isopropyl-, and 2-n-butylpropane-1,3-diol mono(meth)acrylate.

**8.** Coating materials according to Claim 7, **characterized in that** 2-methyl-1,3-diol mono(meth)acrylate (a1) is used.

**9.** Coating materials according to any one of Claims 1 to 8, **characterized in that** the monomers (a2) are selected from the group consisting of hydroxyalkyl esters of olefinically unsaturated carboxylic, sulfonic and phosphonic acids and acidic phosphoric and sulfuric esters, allyl alcohol, ethoxylated and propoxylated allyl alcohol and reaction

products of olefinically unsaturated carboxylic, sulfonic and phosphonic acids and acidic phosphoric and sulfuric esters with the glycidyl ester of an alpha-branched monocarboxylic acid having from 5 to 18 carbon atoms in the molecule.

**10.** Coating materials according to any one of Claims 1 to 9, **characterized in that** the (meth)acrylate copolymers (A) contain on average per molecule

(i) at least one nonhydroxyl, reactive functional group which undergoes thermally initiated crosslinking reactions with itself or with complementary reactive functional groups, and/or
(ii) at least one reactive functional group having at least one bond which can be activated with actinic radiation.

**11.** Coating materials according to any one of Claims 1 to 10, **characterized in that** the coating materials further comprise at least one constituent selected from the group consisting of low molecular mass, oligomeric and polymeric compounds (C) other than the (meth)acrylate copolymers (A), which contain on average per molecule

(i) at least one reactive functional group which can undergo thermally initiated crosslinking reactions with complementary reactive functional groups, and/or
(ii) at least one reactive functional group having at least one bond which can be activated with actinic radiation.

**12.** Coating materials according to Claim 10 or 11, **characterized in that** the bonds which can be activated with actinic radiation are selected from the group consisting of carbon-hydrogen single bonds or carbon-carbon, carbon-oxygen, carbon-nitrogen, carbon-phosphorus, and carbon-silicon single bonds and double bonds.

**13.** Coating materials according to Claim 12, **characterized in that** the double bonds are carbon-carbon double bonds ("double bonds").

**14.** Coating materials according to Claim 13, **characterized in that** the reactive functional groups (ii) are selected from the group consisting of (meth)acrylate, ethacrylate, crotonate, cinnamate, vinyl ether, vinyl ester, dicyclopentadienyl, norbornenyl, isoprenyl, isopropenyl, allyl, and butenyl groups; dicyclopentadienyl ether, norbornenyl ether, isoprenyl ether, isopropenyl ether, allyl ether, and butenyl ether groups; and dicyclopentadienyl ester, norbornenyl ester, isoprenyl ester, isopropenyl ester, allyl ester, and butenyl ester groups.

**15.** Coating materials according to Claim 14, **characterized in that** acrylate groups (ii) are used.

**16.** Coating materials according to any of one Claims 10 to 15, **characterized in that** the complementary reactive functional groups (i) are selected on the one hand from the group consisting of thiol, amino, N-methylolamino, N-alkoxymethylamino, imino, carbamate, allophanate and/or carboxyl groups, and on the other hand from the group consisting of anhydride, carboxyl, epoxy, blocked and unblocked isocyanate, urethane, alkoxycarbonylamino, methylol, methylol ether, carbonate, amino and/or beta-hydroxyalkylamide groups.

**17.** Coating materials according to any one of Claims 1 to 18, **characterized in that** they contain from 0.2 to 5% by weight, based on the solids of the coating material, of at least one photoinitiator (D).

**18.** Coating materials according to any one of Claims 1 to 17, **characterized in that** the coating materials comprise at least one additive (E) different than the additives (B) and selected from the group consisting of binders other than the binders (A) and additives (B) and curable physically or by means of heat alone; thermally curable reactive diluents; molecularly dispersely soluble dyes; light stabilizers, such as UV absorbers and reversible free-radical scavengers (HALS); antioxidants; low-boiling and high-boiling ("long") organic solvents; devolatilizers; wetting agents; emulsifiers; slip additives; polymerization inhibitors; thermal crosslinking catalysts; thermolabile free-radical initiators; adhesion promoters; leveling agents; film formation auxiliaries; rheological aids, such as thickeners and pseudoplastic sag control agents, SCAs; flame retardants; corrosion inhibitors; free-flow aids; waxes; siccatives; biocides, and flatting agents.

**19.** Coating materials according to any one of Claims 1 to 18, **characterized in that** the coating materials comprise at least one pigment (F) selected from the group consisting of organic and inorganic, transparent and hiding, color and/or effect, electrically conductive, magnetically shielding, and fluorescent pigments, fillers, and nanoparticles.

**20.** Use of the coating materials according to any of Claims 1 to 19 as coating materials, adhesives and sealing compounds.

## Revendications

1. Matières de revêtement durcissables thermiquement et par un rayonnement actinique, contenant

   (A) au moins un liant choisi dans le groupe constitué par des résines de polyaddition et des résines de polycondensation ainsi que des produits de (co)polymérisation de monomères à insaturation oléfinique, à structure statistique, alternée ou séquencée, à structure linéaire, ramifiée ou en peigne, durcissables thermiquement ou thermiquement et par un rayonnement actinique ;
   et
   (B) de 0,01 à 3 % en poids, par rapport à la matière solide de la matière de revêtement, d'au poins un additif à base d'au moins un produit de (co)polymérisation de (méth)acrylate, choisi dans le groupe constitué par des produits de (co)polymérisation de (méth)acrylate ayant une masse moléculaire moyenne en nombre de 4 000 à 100 000 daltons et une polarité faible à élevée.

2. Matière de revêtement selon la revendication 1, **caractérisée en ce que** l'additif contient un produit de copolymérisation de (méth)acrylate (B).

3. Matière de revêtement selon la revendication 1 ou 2, **caractérisée en ce que** le produit de copolymérisation de (méth)acrylate (B) a une masse moléculaire moyenne en nombre de 4 500 à 40 000 daltons et une polarité faible à moyenne.

4. Matière de revêtement selon l'une quelconque des revendications 1 à 3, **caractérisée en ce que** l'additif (B) contient au moins un solvant organique pour le produit de (co)polymérisation de (méth)acrylate (B).

5. Matière de revêtement selon la revendication 4, **caractérisée en ce que** la teneur en matière solide de l'additif (B), par rapport à sa quantité totale, va de 10 à 80 % en poids.

6. Matières de revêtement selon l'une quelconque des revendications 1 à 5, **caractérisées en ce que** le liant (A) est choisi dans le groupe constitué par des produits de copolymérisation de (méth)acrylate qui présentent un indice de groupes OH de 100 à 220 mg de KOH/g, une température de transition vitreuse de -35 à +60 °C, une masse moléculaire moyenne en nombre de 1 000 à 10 000 daltons et une masse moléculaire moyenne en poids de 2 000 à 40 000 daltons et qui contiennent, incorporée par polymérisation, une quantité, correspondant à l'indice de groupes hydroxy, de monomères (a) à insaturation oléfinique, contenant des groupes hydroxy, dont

   (a1) 20 à 90 % en poids, par rapport aux monomères (a) contenant des groupes hydroxy, choisis dans le groupe constitué par le (méth)acrylate de 4-hydroxybutyle et/ou un mono(méth)acrylate de 2-alkyl-propane-1,3-diol, et
   (a2) 10 à 80 % en poids, par rapport aux monomères (a) contenant des groupes hydroxy, choisis dans le groupe constitué par d'autres monomères à insaturation oléfinique, contenant des groupes hydroxy.

7. Matières de revêtement selon l'une quelconque des revendications 1 à 6, **caractérisées en ce que** les mono(méth) acrylates de 2-alkyl-propane-1,3-diol (a1) sont choisis dans le groupe constitué par les mono(méth)acrylates de 2-méthyl-, 2-éthyl-, 2-propyl-, 2-isopropyl- et 2-n-butyl-propane-1,3-diol.

8. Matières de revêtement selon la revendication 7, **caractérisées en ce qu'**on utilise le mono(méth)acrylate de 2-méthyl-1,3-diol (a1).

9. Matières de revêtement selon l'une quelconque des revendications 1 à 8, **caractérisées en ce que** les monomères (a2) sont choisis dans le groupe constitué par des esters hydroxyalkyliques d'acides carboxyliques, sulfoniques et phosphoniques à insaturation oléfinique et des esters acides d'acides phosphorique et sulfurique, l'alcool allylique, l'alcool allylique éthoxylé et propoxylé et des produits de réaction d'acides carboxyliques, sulfoniques et phosphoniques à insaturation oléfinique et d'esters acides d'acides phosphorique et sulfurique avec l'ester glycidylique d'un acide monocarboxylique ramifié en position alpha, ayant de 5 à 18 atomes de carbone dans la molécule.

10. Matières de revêtement selon l'une quelconque des revendications 1 à 9, **caractérisées en ce que** les produits de copolymérisation de (méth)acrylate (A) comportent dans la molécule, en moyenne statistique

(i) au moins un groupe fonctionnel dans la molécule, réagissant différemment du groupe hydroxy, qui participe avec lui-même ou avec des groupes fonctionnels réactifs complémentaires à des réactions de réticulation à amorçage thermique, et/ou
(ii) au moins un groupe fonctionnel réactif comportant au moins une liaison activable par un rayonnement actinique.

**11.** Matières de revêtement selon l'une quelconque des revendications 1 à 10, **caractérisées en ce que** les matières de revêtement contiennent encore au moins un composant choisi dans le groupe constitué par des composés oligomères ou polymères (C) de faible masse moléculaire et différents des produits de copolymérisation de (méth) acrylate (A), qui comportent dans la molécule, en moyenne statistique

(i) au moins un groupe fonctionnel réactif qui peut participer avec des groupes fonctionnels réactifs complémentaires à des réactions de réticulation à amorçage thermique, et/ou
(ii) au moins un groupe fonctionnel réactif comportant au moins une liaison activable par un rayonnement actinique.

**12.** Matières de revêtement selon la revendication 10 ou 11, **caractérisées en ce que** les liaisons activables par un rayonnement actinique sont choisies dans le groupe constitué par des liaison simples carbone-hydrogène et des liaisons simples ou doubles carbone-carbone, carbone-oxygène, carbone-azote, carbone-phosphore et carbone-silicium.

**13.** Matières de revêtement selon la revendication 12, **caractérisées en ce que** les doubles liaisons sont des doubles liaisons carbone-carbone ("doubles liaisons").

**14.** Matières de revêtement selon la revendication 13, **caractérisées en ce que** les groupes fonctionnels réactifs (ii) sont choisis dans le groupe constitué par les groupes (méth)acrylate, éthacrylate, crotonate, cinnamate, éther vinylique, ester vinylique, dicyclopentadiényle, norbornényle, isoprényle, isopropényle, allyle et butényle ; les groupes éther dicyclopentadiénylique, norbornénylique, isoprénylique, isopropénylique, allylique ou buténylique, et les groupes ester dicyclopentadiénylique, norbornénylique, isoprénylique, isopropénylique, allylique ou buténylique.

**15.** Matières de revêtement selon la revendication 14, **caractérisées en ce qu'**on utilise des groupes acrylate (ii).

**16.** Matières de revêtement selon l'une quelconque des revendications 10 à 15, **caractérisées en ce que** les groupes fonctionnels réactifs complémentaires (i) sont choisis, d'une part, dans le groupe constitué par les groupes thiol, amino, N-méthylolamino, N-alcoxyméthylamino, imino, carbamate, allophanate et/ou carboxy, et d'autre part dans le groupe constitué par les groupes anhydride, carboxy, époxy, isocyanate bloqué ou non bloqué, uréthanne, alcoxycarbonylamino, méthylol, méthyloléther, carbonate, amino et/ou bêtahydroxyalkylamido.

**17.** Matières de revêtement selon l'une quelconque des revendications 1 à 18, **caractérisées en ce qu'**elles contiennent de 0,2 à 5 % en poids, par rapport à la matière solide du matériau de revêtement, d'au moins un photoamorceur (D).

**18.** Matières de revêtement selon l'une quelconque des revendications 1 à 17, **caractérisées en ce que** les matières de revêtement contiennent au moins un additif (E) différent des additifs (B), choisi dans le groupe constitué par des liants durcissables physiquement ou purement thermiquement, différents des liants (A) et des additifs (B) ; des diluants réactifs durcissables thermiquement ; des colorants solubles en dispersion moléculaire ; des photoprotecteurs, tels que des absorbeurs UV et des capteurs réversibles de radicaux (HALS) ; des antioxydants ; des solvants organiques à bas point d'ébullition ou à haut point d'ébullition ("longs") ; des agents de désaération ; des agents mouillants ; des émulsifiants ; des additifs de glissement ; des inhibiteurs de polymérisation ; des catalyseurs pour la réticulation thermique ; des amorceurs radicalaires thermolabiles ; des promoteurs d'adhérence ; des agents d'étalement ; des adjuvants filmogènes ; des adjuvants de rhéologie, tels que des épaississants et des agents anticoulure à viscosité de structure, SCA *(sag control agents) ;* des agents ignifuges ; des inhibiteurs de corrosion ; des adjuvants d'écoulement ; des cires ; des siccatifs ; des biocides et des agents de matité.

**19.** Matières de revêtement selon l'une quelconque des revendications 1 à 18, **caractérisées en ce que** les matières de revêtement contiennent au moins un pigment (F) choisi dans le groupe constitué par des pigments organiques ou inorganiques, transparents ou couvrants, colorants et/ou à effet, conducteurs de l'électricité, protégeant contre le magnétisme ou fluorescents, des charges et des nanoparticules.

**20.** Utilisation des matières de revêtement selon l'une quelconque des revendications 1 à 19, en tant que matières de revêtement, adhésifs et matériaux d'étanchéité.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4215070 A1
- DE 19818735 A1
- DE 19908018 A1
- DE 19930665 A1
- DE 19930067 A1
- DE 19930664 A1
- DE 19924674 A1
- DE 19920799 A1
- DE 19958726 A1
- DE 19961926 A1
- DE 10027268
- DE 10042152
- DE 10047989
- DE 10055549
- US 4758632 A1
- US 4301257 A1
- US 2979514 A1
- DE 19625773 A1
- DE 3807571 A1
- DE 3706095 A1
- EP 0358153 B1
- US 4754014 A1
- DE 4421823 A1
- WO 9222615 A
- DE 19709465 A1
- DE 19709476 A1
- DE 2848906 A1
- DE 19524182 A1
- DE 19828742 A1
- DE 19628143 A1
- DE 19628142 A1
- EP 0554783 A1
- WO 9527742 A
- WO 8202387 A
- WO 9802466 A
- DE 19850243 A1
- DE 19709467 C2
- DE 19924171 A1
- DE 19908013 A1
- DE 19709467 C1
- EP 0928800 A1
- DE 19914896 A1
- DE 19904317 A1
- DE 19855125 A1
- JP 50142501 A
- JP 52065534 A
- US 4375498 A1
- US 4537926 A1
- US 4761212 A1
- EP 0529335 A1
- DE 4125459 A1
- EP 0595186 A1
- EP 0074634 A1
- EP 0505445 A1
- DE 4235778 A1
- EP 0646420 A1
- EP 0639660 A1
- EP 0817648 A1
- DE 19512017 C1
- EP 0192113 A2
- DE 4126476 A1
- WO 9807794 A
- DE 4438504 A1
- DE 4337961 A1
- WO 8910387 A
- US 4450200 A1
- US 4614683 A1
- WO 49026827 A
- EP 0089497 A1
- EP 0256540 A1
- EP 0260447 A1
- EP 0297576 A1
- WO 9612747 A
- EP 0523610 A1
- EP 0228003 A1
- EP 0397806 A1
- EP 0574417 A1
- EP 0531510 A1
- EP 0581211 A1
- EP 0708788 A1
- EP 0593454 A1
- DE A4328092 A1
- EP 0299148 A1
- EP 0394737 A1
- EP 0590484 A1
- EP 0234362 A1
- EP 0234361 A1
- EP 0543817 A1
- WO 9514721 A
- EP 0521928 A1
- EP 0522420 A1
- EP 0522419 A1
- EP 0649865 A1
- EP 0536712 A1
- EP 0596460 A1
- EP 0596461 A1
- EP 0584818 A1
- EP 0669356 A1

- EP 0634431 A1
- EP 0678536 A1
- EP 0354261 A1
- EP 0424705 A1
- WO 9749745 A
- WO 9749747 A
- EP 0401565 A1
- EP 0817684 A
- DE 19839453 A1

**In der Beschreibung aufgeführte Nicht-Patentliteratur**

- Römpp Lexikon Lacke und Druckfarben. Georg Thieme Verlag, 1998, 49-51
- Paints, Coatings and Solvents. Wiley-VCH, 1998, vol. 14.9, 327-373
- Römpp Lexikon Lacke und Druckfarben. Georg Thieme Verlag, 1998, 457
- Römpp Lexikon Lacke und Druckfarben. Georg Thieme Verlag, 1998
- Römpp Lexikon Lacke und Druckfarben. Georg Thieme Verlag, 1998, 598
- Römpp Lexikon Lacke und Druckfarben. Georg Thieme Verlag, 1998, 491-492
- Römpp Lexikon Lacke und Druckfarben. Georg Thieme Verlag, 1998, 444-446
- **VON JOHAN BIELEMAN.** Lackadditive. Wiley-VCH, 1998
- Römpp Lexikon Lacke und Druckfarben. Georg Thieme Verlag, 1998, 187-188
- Formulations for Printing Inks, Coatings and Paints. **R. HOLMES, U.V. ; E.B. CURING.** SITA Technology. Academic Press, 1984
- *CHEMICAL ABSTRACTS,* 87: 137427